# EUROPEAN PATENT APPLICATION

(11) **EP 4 333 543 A1**
(43) Date of publication of application: **06.03.2024**
(21) Application number: 22192832.8
(22) Date of filing: 30.08.2022
(51) Int. Cl.: H04W 76/11, H04W 8/26, H04W 88/04, H04W 76/14, H04W 84/12, H04W 92/18

(54) **TELECOMMUNICATIONS NETWORK AND A METHOD OF OPERATING A TELECOMMUNICATIONS NETWORK**

(71) Applicant: British Telecommunications public limited company, London E1 8EE (GB)
(72) Inventor: DOYLE, Claire, London E1 8EE (GB); BROWN, Ruth, London E1 8EE (GB); CUEVAS RAMIREZ, Maria, London E1 8EE (GB)
(74) Representative: British Telecommunications public limited company Intellectual Property Department

(57) **Abstract**

A method (200) of operating a telecommunications network (100), said telecommunications network comprising a: cellular telecommunications network (120); Wireless Local Area Network (130), WLAN; master User Equipment (110-1), UE; and client UE (110-2); wherein the master UE and the client UE are each configured for communication: therebetween by using the WLAN; and with the cellular telecommunications network; and the method comprising the steps of: associating, at the cellular telecommunications network, the master UE with the client UE (210); generating, at the cellular telecommunications network, a network communication for the client UE (240); communicating, by means of the cellular telecommunications network, the generated network communication to the associated master UE (240); identifying, by means of the master UE, a WLAN identifier of the client UE for use with the WLAN (230); and communicating at least a portion of the network communication from the master UE to the client UE using the identified WLAN identifier (250).

## Description

### Field of Invention

The present invention relates to a telecommunications network and to a method of operating a telecommunications network.

### Background

The 'Internet of Things' is likely to introduce a very large number of battery-powered devices that wirelessly communicate with cellular telecommunications networks. Such devices include, for example, smart sensors, smart meters, tracking devices for logistics, and wearable or implantable medical devices.

Optimising the efficiency of battery usage for such devices is important, especially where such devices are provided in remote and/or difficult-to-access locations. However, there is a conflict between preserving battery life and high frequency or intensity of interactions with a cellular telecommunications network by such devices. Accordingly, such devices may be configured to communicate only infrequently with the telecommunications networks so as to conserve battery life, which may therefore limit the utility of the device.

It is an aim of the present invention to at least alleviate some of the aforementioned problems.

### Statements of Invention

According to a first aspect of the present invention, there is provided: a method of operating a telecommunications network, said telecommunications network comprising a: cellular telecommunications network; Wireless Local Area Network, WLAN; master User Equipment, UE; and client UE; wherein the master UE and the client UE are each configured for communication: therebetween by using the WLAN; and with the cellular telecommunications network; and the method comprising the steps of: associating, at the cellular telecommunications network, the master UE with the client UE; generating, at the cellular telecommunications network, a network communication for the client UE; communicating, by means of the cellular telecommunications network, the generated network communication to the associated master UE; identifying, by means of the master UE, a WLAN identifier of the client UE for use with the WLAN; and communicating at least a portion of the network communication from the master UE to the client UE using the identified WLAN identifier.

As used herein, the "network communication for the client UE" preferably connotes a network communication intended, by a sender of the network communication, for receipt by the client UE.

Preferably, the step of communicating the generated network communication to the associated master UE is performed only and/or directly to the master UE, and more preferably instead of to the client UE. Optionally, the step of associating the master UE with the client UE is performed in response to a communication from the master UE to the cellular telecommunications network.

Preferably, communicating the generated network communication to the associated master UE is performed in response to the cellular telecommunications network determining that the client UE is disengaged from the cellular network. As used herein, the phrase "disengaged from the cellular network", as applied to a UE, preferably connotes that the UE is not connected, and/or cannot connect, to the cellular network, and/or is in a state of Discontinuous Reception (DrX). Preferably, as used herein the term "discontinuous reception" includes a state in which a UE utilises scheduled periods, of a predefined length, of inactivity and activity with respect to its interaction with the cellular telecommunications network, at least so as to conserve power and/or reduce network signalling, and preferably includes Discontinuous Reception (DrX), extended Discontinuous Reception (eDrX), and Power Save Mode (PSM).

Preferably, the WLAN identifier of the client UE is communicated by the client UE to the master UE.

Preferably, the generated network communication comprises a unique identifier of the client UE, and wherein the WLAN identifier of the client UE is identified by the master UE from said unique identifier. Preferably, associating the master UE with the client UE is performed using the unique identifier of the client UE, and more preferably also using a corresponding unique identifier of the master UE.

Preferably, the unique identifier comprises the WLAN identifier of the client UE. Optionally, the WLAN identifier is communicated, prior to generating the network communication, from the client UE to the cellular telecommunications network, which may be performed directly or via the master UE. Optionally, the WLAN identifier is communicated to the cellular telecommunications network and/or master UE by means of an application running on the client UE, and more preferably may be communicated in response to a request and/or pushed by the client UE.

Preferably, the unique identifier comprises a cellular network identifier of the client UE. Optionally, the unique identifier comprises only one of: the WLAN identifier of the client UE; and said cellular network identifier.

Preferably, the method further comprises the step of generating a mapping between the cellular and WLAN identifiers of the client UE, wherein identifying the WLAN identifier by the master UE is performed using the generated mapping. Optionally, the generated mapping is shared with both the cellular telecommunications network and the master UE. Optionally, the mapping is generated by the cellular telecommunications network and/or the master UE. Optionally, the mapping further comprises a time at which said mapping is generated, wherein a further mapping is generated after a pre-determined period after said time.

Preferably, generating the mapping is performed in response to the client UE communicating, in association with one another, the cellular and WLAN identifiers of the client UE to the master UE and/or the cellular telecommunications network.

Preferably, the portion of the network communication communicated from the master UE to the client UE comprises an instruction for execution by the client UE. Optionally, said portion of the network communication comprises a message for the client UE.

Preferably, the instruction is to reconfigure operation of the client UE. Optionally, the instruction is an instruction to: reboot; restart; sleep; perform an installation; run an application or script; operate hardware; transmit a communication; and/or record and/or process data.

Preferably, the instruction is to reconfigure operation of a wireless network interface of the client UE for communicating with the cellular network. Optionally, the instruction comprises signalling or control plane traffic.

Preferably, the instruction is to reconfigure discontinuous reception. Optionally, the instruction is to: initiate or cease discontinuous reception; perform a predefined number of discontinuous reception cycles; and/or adjust a duration and/or frequency of a discontinuous reception (DrX) cycle.

Preferably, the master UE is configured to prevent itself from executing the instruction.

Preferably, the method further comprises the step of designating, from a plurality of UEs, the master UE and/or the client UE. Optionally, said designating is: performed by the cellular telecommunications network; and/or is pre-defined. Optionally, the UE designated as the master UE is selected on the basis of having the greatest: cellular signal strength; available computing resources; and/or battery power. Optionally, the UE designated as the client UE is selected on the basis of having: the weakest cellular signal strength; least battery power; and/or least available computing resources. Optionally, the, at least two, UEs having the strongest WLAN signal are designated as the master and client UEs. Optionally, the client UE is designated by the master UE, and may be designated in respect to establishing the WLAN therebetween. Optionally, the step of associating the master UE with the client UE at the cellular telecommunications network is performed in response to a communication from the master UE and/or client UE to record an association between the master UE and the client, wherein said communication may comprise the cellular and/or WLAN identifier of the client and/or master UE.

Preferably, the method further comprises the step of de-associating the client UE and the master UE, and in response reconfiguring the cellular telecommunications network to communicate a further network communication for the client UE to the client UE without said network communication being communicated to the master UE. Optionally, said de-associating is performed in response to the client UE being inaccessible to the master UE via the WLAN.

Optionally, the method is performed after the master UE and the client UE have established a connection via the WLAN. Optionally, the master UE is associated with: only one client UE; or a plurality of client UEs. Optionally, the client UE is associated with: only one master UE; or a plurality of master UEs. Optionally, the client UE is a set of at least one UE.

Optionally, in a further iteration of the methods described above, steps performed by the master UE are instead performed by the client UE, and vice versa, thereby allowing the roles of master and client to be swapped.

Preferably, the WLAN utilises Wi-Fi^{RTM}, Bluetooth^{RTM}, and/or ZIGBEE^{RTM}. Optionally, the WLAN utilises a non-3GPP network and/or protocol. Optionally, the WLAN utilises a V2X protocol. Optionally the WLAN is generated by: the client UE; the master UE; and/or another device. Optionally, the WLAN ID comprises a: Service Set IDentifier, SSID; and/or a Basic Service Set IDentifier, BSSID; IP address; MAC address; and/or port number.

Optionally, the unique cellular identifier is an International Mobile Subscriber Identity (IMSI), Temporary Mobile Subscriber Identity (TMSI), SUbscription Concealed Identifier (SUCI), and/or SUbscription Permanent Identifier (SUPI).

Optionally, the client UE and/or the master UE is/are battery-powered.

Optionally, the client UE and/or the master UE is/are integrated as part of a: smart meter and/or sensor; vehicle; weather station; chemical and/or physical sensor; tracking device; security apparatus; and/or domestic appliance.

Optionally, associating the master UE with the client UE is performed by a UDM (and more preferably when the association is static), AF and/or an AMF of the cellular telecommunications network, and in particular of a core of said network.

Preferably, the master UE and the client UE utilise the same AF, AMF and/or UDM of the core network.

Optionally, there is provided a further step of said associating being communicated to the master and/or client UE, which may be performed by the cellular telecommunications network.

According to another aspect of the invention, there is provided a computer-readable carrier medium comprising a computer program, which, when the computer program is executed by a computer, causes the computer to carry out the methods as described above.

According to yet another aspect of the invention, there is provided: a telecommunications network comprising a: cellular telecommunications network; Wireless Local Area Network, WLAN; master User Equipment, UE; and client UE; wherein the master UE and the client UE each comprise: a WLAN interface so as to communicate therebetween via the WLAN; and a cellular telecommunications network interface for communication with the cellular telecommunications network; and the cellular telecommunications network comprising: a processing configured to: associate, at the cellular telecommunications network, the master UE with the client UE; generate, at the cellular telecommunications network, a network communication for the client UE; and a transmitter for communicating the generated network communication to the associated master UE; and the master UE comprising: a processor for identifying, by means of the master UE, a WLAN identifier of the client UE for use with the WLAN; and a transmitter for communicating at least a portion of the network communication from the master UE to the client UE using the identified WLAN identifier.

The invention includes any novel aspects described and/or illustrated herein. The invention also extends to methods and/or apparatus substantially as herein described and/or as illustrated with reference to the accompanying drawings. The invention is also provided as a computer program and/or a computer program product for carrying out any of the methods described herein and/or for embodying any of the apparatus features described herein, and a computer-readable medium storing thereon a program for carrying out any of the methods and/or for embodying any of the apparatus features described herein. Features described as being implemented in hardware may alternatively be implemented in software, and vice versa.

Any apparatus feature may also be provided as a corresponding step of a method, and vice versa. As used herein, means plus function features may alternatively be expressed in terms of their corresponding structure, for example as a suitably-programmed processor.

Any feature in one aspect of the invention may be applied, in any appropriate combination, to other aspects of the invention. Any, some and/or all features in one aspect can be applied to any, some and/or all features in any other aspect, in any appropriate combination. Particular combinations of the various features described and defined in any aspects of the invention can be implemented and/or supplied and/or used independently.

As used throughout, the word 'or' can be interpreted in the exclusive and/or inclusive sense, unless otherwise specified.

The invention extends to a method of operating a telecommunications networks and to a telecommunications network as described herein and/or substantially as illustrated with reference to the accompanying drawings. The present invention is now described, purely by way of example, with reference to the accompanying diagrammatic drawings, in which:
Figure 1 shows an exemplary telecommunications network; and

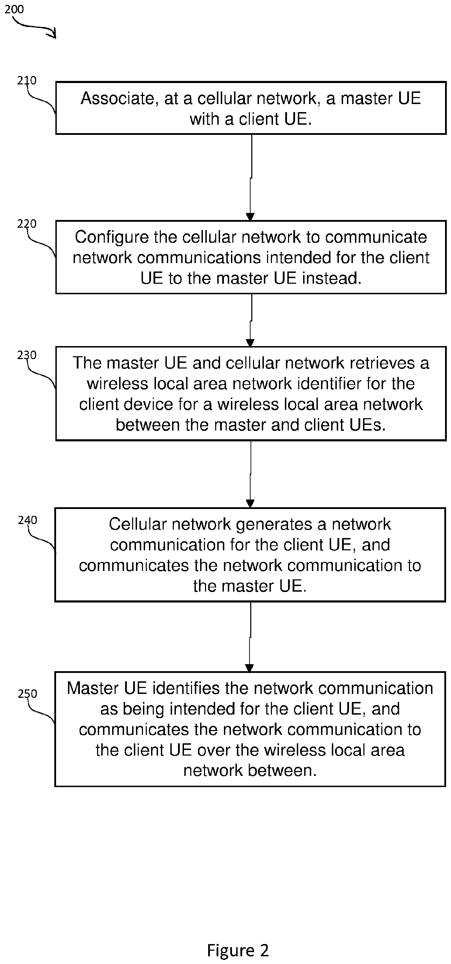

Figure 2 shows a process for operating the telecommunications network.

### Specific Description

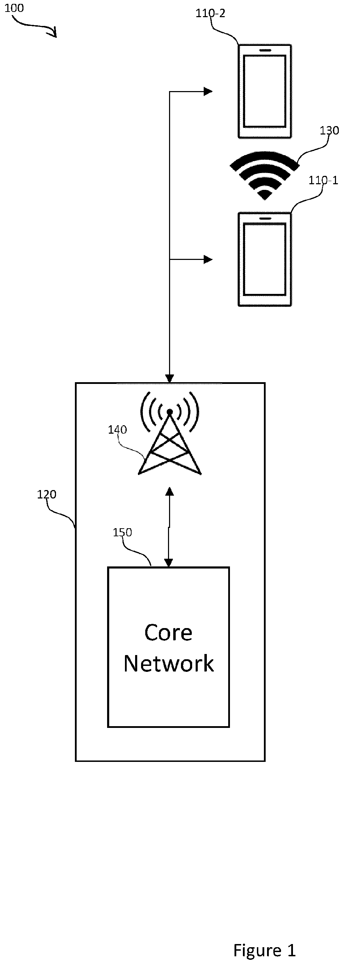

Figure 1 shows an exemplary telecommunications network 100, comprising a plurality of User Equipment, UE, 110, a cellular telecommunications network 120, and a Wireless Local Area Network (WLAN) 130.

The cellular telecommunications network 120 includes a Radio Access Network (RAN) provided by a RAN access point 140 (*e.g.* in the form of a macro-, micro-, pico- or femto-cell site) that is in turn in communications with a core network 150. In particular, the cellular telecommunications network is configured according to the GSM, 3G, 4G and/or 5G standards.

The plurality of UEs 110 are each configured wirelessly to communicate with the cellular telecommunications network 120, via the RAN access point 140, and therefore comprise appropriate processors and interfaces (not shown) for such communication, as is known in the art.

The plurality of UEs 110 are also configured directly to communicate therebetween using the WLAN 130, and therefore also comprise appropriate processors and interfaces (not shown) for such communication, as is also known in the art.

In more detail, the plurality of UEs 110 comprises a: master UE 110-1; and client UE 110-2.

The WLAN is available to be provided by the client and/or master UE (and in particular as an *ad hoc* network) or by another device (not shown), such as a dedicated WLAN router.

As described in more detail below, the cellular network is configured to redirect communications, and in particular instructions, intended for the client UE to the master UE instead, which is in turn configured to relay said communications to the client UE using the WLAN 130. In this way, cellular communication with the client UE may be performed whilst the client UE is disengaged from the cellular telecommunications network. As a result, battery life of the client UE may be improved by using only the WLAN 130 to receive targeted communications from the cellular network. At the same time, cellular network congestion may also be reduced.

At a first step 210, the cellular network records an association between the master UE and the client UE. This association informs the cellular network that cellular network communications intended for the specific client UE 110-2 are instead, when performing process 200, to be communicated to the master UE 110-1 for subsequent relaying on to the client UE. The association is stored in a Unified Data Management (UDM, not shown) function, an Application Function (AF, not shown), and/or Access and Mobility Management Function (AMF, not shown) of the cellular network as a relational database using, at least, unique cellular network identifiers of the master UE and the client UE, such as an International Mobile Subscriber Identity (IMSI).

The roles of, and association between, the client and master UEs may be predefined or dynamically allocated based on rules, such as proximity (*e.g*. determined based on a signal strength of the WLAN, as reported by the client and/or master UE/s) and/or capability (*e.g*. available processing resources). Such allocation is available to be performed by the master UE, client UE and/or the cellular telecommunications network. Regardless of how the roles of the master UE and the client UE are determined, at this step 210, the cellular network is provided with the identities of the paired master 110-1 and client 110-2 UEs.

At a next step 220, the cellular network is configured to re-address network communications that are intended for ultimate receipt by the client UE so that said communications are instead processed by the cellular network to be delivered to the master UE.

Step 220 is available to be triggered in response to the cellular network determining that the client UE 110-1 is disengaged from the cellular telecommunications network (as monitored, for example, by the AMF or a Session Management Function, SMF, of the cellular telecommunications network), including in a discontinuous reception mode or an idle mode, and that the master UE is available to the cellular telecommunications network.

At a next step 230, the master UE 110-1 retrieves, from the client UE 110-2, a WLAN identifier for the client UE to communicate over the WLAN with the master UE. In one example, the WLAN identifier for the client UE is retrieved directly by the master UE from the client UE.

At step 230, the cellular network also retrieves the WLAN identifier for the client UE, in association with the unique cellular identifier of the client UE. In this way, and in this example, the cellular network is therefore available to map together the WLAN identifier and the cellular network identifier of the client UE. In one example, the WLAN identifier is reported by the client UE to the cellular network, directly or via the master UE. The WLAN identifier is available to be in the form of a/an: IP address; MAC address; SSID and/or BSSID; and/or Bluetooth Device Address.

At a next step 240, the cellular telecommunications network generates a cellular network communication for the client UE; this communication comprises: information to convey that the communication is intended for the client UE; and data.

The information comprises a pre-defined flag intelligible to the master UE to relay the network communication to the client UE; and/or an identifier of the client UE (*e.g.* in the form of the cellular ID (which, in this example of a pairing of a single client UE with a single master UE, the identifier need not be known to the master UE, since the master UE can determine that the cellular ID is not that of the master UE); and/or the WLAN identifier.

The data in the network communication comprises:
- a message for the client UE, such as a human-readable communication;
- an instruction for the client UE, and may include a/an:
   ∘ device operation instruction, such as to:
      ▪ power down, restart, sleep, and/or reboot;
      ▪ perform a software installation and/or update;
      ▪ run an application and/or script;
      ▪ retrieve, record and/or process data;
      ▪ perform a hardware operation; and/or
   ∘ a cellular operation instruction, and in particular signally or control plane traffic, such as to:
      ▪ transmit a communication; and/or
      ▪ reconfigure operation of a radio interface of the client UE, such as in relation to discontinuous reception.

Having knowledge of the cellular identity of the master UE associated with the client UE, the cellular network addresses and then transmits the generated cellular network communication to the master UE 110-2.

Upon receipt of the network communication at the master UE 110-2, at a subsequent step 250, upon identifying the information that the communication is intended for the client UE and/or not intended for the master UE, and having knowledge of the WLAN identifier of the client UE (as retrieved at preceding step 230), the master UE communicates the communication (or at least a portion thereof, such as without the addressing information of the master UE) to the client UE via the WLAN.

Where the cellular network communication comprises an instruction, the master UE is configured to prevent execution of any instruction intended for the client UE.

Accordingly, the cellular network is available to communicate with the client UE in a manner that bypasses a direct cellular network connection with the client UE.

Specifically, where preserving battery life of the client UE is desirable (in particular for loT applications), discontinuous reception of the client UE may be configured by the cellular network in a more power-efficient manner by using the WLAN, rather than the cellular network (the latter form of communication typically being less power efficient).

### Alternatives and Modifications

In the example of Figure 1, there are provided only two UEs, and therefore only one UE in each of the roles of the master UE and the client UE. However, it will be appreciated that the plurality of UEs 110 is available to comprise at least two UEs. Of this plurality, there is provided one master UE for at least one client UE. Accordingly, for example, the master UE is configured as the relay for a plurality of client UEs using the, or another, WLAN, and in which each client UE is provided with a unique WLAN identifier.

To allow different network communications to be communicated to specific client UEs, process 200 may be modified such that: at step 210, the cellular network associates the master UE with the cellular identifiers of each of the client UEs, and the cellular network and/or the master UE is/are provided with a mapping between the cellular and WLAN identifiers of each client UE, and the information in the network communication received by the master UE explicitly comprises the cellular ID and/or WLAN ID of the intended recipient of the client UE. Where only the cellular ID of the intended recipient client UE is provided, the mapping permits derivation of the corresponding WLAN identifier.

In an alternative, process 200 comprises the further step of the master UE reporting to the cellular network the WLAN ID of the client UE, which is available to be communicated by the client UE to the master UE or detected by the master UE. In this way, process 200 may provide, to a greater extent than by solely using the cellular network, proximity of the client and master UEs (since execution of step/s 230 and/or 250 are contingent upon each UE being within range of the WLAN, which typically has a smaller range than the RAN). Such knowledge can be used to trigger process 200 and to generate location and/or proximity-based network communications. For example, the client UE comprises an loT location-reporting sensor for use in logistics (such as container shipping) and the master UE is associated with a container ship. The cellular network is available to instruct the client UE to enter a long sleep upon the master UE reporting to the cellular network proximity of the client UE (*i.e.* suggesting that the client UE is on-board the container ship and therefore subject to sea-faring transport without cellular network coverage, therefore obviating the need for the client UE to attempt cellular network access, and therefore conserving battery).

It will be appreciated that, in some examples, certain steps of process 200 may be performed in a different sequence. For example, step 230 may precede step/s 210 and/or 220.

Process 200 is available to reiterate to step 210 at a suitable frequency and/or in response to disconnection or reconnection of the WLAN, thereby ensuring that a master UE is available to relay the network communication to the client UE over the WLAN, or whether another master UE ought to be associated with the client UE.

In an alternative, step 230 is re-iterated to ensure that the WLAN ID of the client UE, as retrieved by the master UE, is up to date. Re-iteration of step 230 is triggered after a predetermined period of time and/or after disconnection and/or establishment of the WLAN.

As described, the roles of client UE and master UE are available to be pre-defined, or dynamically allocated to the plurality of UEs 110. For example, upon detecting that the UEs 110 are proximate, such as by means of being accessible via the WLAN 130, a process to allocate said roles is performed. The process (performed by any of the UEs, router and/or the cellular network) utilises a set of rules to identify and then designate UEs to their respective client and master roles. For example, a UE having the greater cellular signal strength is identified as the master UE 110-1 for another UE having the weakest cellular signal strength, which is designated as the client UE 110-2.

The aforementioned process 200 describes downlink communication from the cellular network to the client UE, via the master UE. It will be appreciated that additionally, or alternatively, process 200 may be adapted for uplink communication from the client UE to the cellular network, via the master UE. To do so, the client UE stores the WLAN identity of the master UE and transmits, over the WLAN, communications intended for the cellular network to the master UE using said WLAN identity. In turn, the master UE relays the communication on to the cellular network, and a mapping is provided between the WLAN and cellular identifiers of the client UE,

Each feature disclosed herein, and (where appropriate) as part of the claims and drawings may be provided independently or in any appropriate combination.

Any reference numerals appearing in the claims are for illustration only and shall not limit the scope of the claims.

## Claims

1. A method of operating a telecommunications network, said telecommunications network comprising a:
cellular telecommunications network;
Wireless Local Area Network, WLAN;
master User Equipment, UE; and
client UE;
wherein the master UE and the client UE are each configured for communication:
therebetween by using the WLAN; and
with the cellular telecommunications network; and
the method comprising the steps of:
associating, at the cellular telecommunications network, the master UE with the client UE;
generating, at the cellular telecommunications network, a network communication for the client UE;
communicating, by means of the cellular telecommunications network, the generated network communication to the associated master UE;
identifying, by means of the master UE, a WLAN identifier of the client UE for use with the WLAN; and
communicating at least a portion of the network communication from the master UE to the client UE using the identified WLAN identifier.

2. A method according to Claim 1, wherein communicating the generated network communication to the associated master UE is performed in response to the cellular telecommunications network determining that the client UE is disengaged from the cellular network.

3. A method according to any preceding claim, wherein the WLAN identifier of the client UE is communicated by the client UE to the master UE.

4. A method according to any preceding claim, wherein the generated network communication comprises a unique identifier of the client UE, and wherein the WLAN identifier of the client UE is identified by the master UE from said unique identifier.

5. A method according to Claim 4, wherein the unique identifier comprises the WLAN identifier of the client UE and/or a cellular network identifier of the client UE.

6. A method according to Claim 5, further comprising the step of generating a mapping between the cellular and WLAN identifiers of the client UE, wherein identifying the WLAN identifier by the master UE is performed using the generated mapping.

7. A method according to Claim 6, wherein generating the mapping is performed in response to the client UE communicating, in association with one another, the cellular and WLAN identifiers of the client UE to the master UE and/or the cellular telecommunications network.

8. A method according to any preceding claim, wherein the portion of the network communication communicated from the master UE to the client UE comprises an instruction for execution by the client UE.

9. A method according to Claim 8, wherein the instruction is to reconfigure operation of the client UE.

10. A method according to Claim 8 or 9, wherein the instruction is to reconfigure operation of a wireless network interface of the client UE for communicating with the cellular network.

11. A method according to any of Claims 8 to 10, wherein the instruction is to reconfigure discontinuous reception.

12. A method according to any of Claims 8 to 11, wherein master UE is configured to prevent itself from executing the instruction.

13. A method according to any preceding claim, further comprising the step of de-associating the client UE and the master UE, and in response reconfiguring the cellular telecommunications network to communicate a further network communication for the client UE to the client UE without said network communication being communicated to the master UE.

14. A computer-readable carrier medium comprising a computer program, which, when the computer program is executed by a computer, causes the computer to carry out the steps of any one of the preceding claims.

15. A telecommunications network comprising a:
cellular telecommunications network;
Wireless Local Area Network, WLAN;
master User Equipment, UE; and
client UE;
wherein the master UE and the client UE each comprise:
a WLAN interface so as to communicate therebetween via the WLAN; and
a cellular telecommunications network interface for communication with the cellular telecommunications network; and
the cellular telecommunications network comprising:
a processing configured to:
associate, at the cellular telecommunications network, the master UE with the client UE;
generate, at the cellular telecommunications network, a network communication for the client UE; and
a transmitter for communicating the generated network communication to the associated master UE; and
the master UE comprising:
a processor for identifying, by means of the master UE, a WLAN identifier of the client UE for use with the WLAN; and
a transmitter for communicating at least a portion of the network communication from the master UE to the client UE using the identified WLAN identifier.
